# EUROPEAN PATENT SPECIFICATION

(11) **EP 1 855 904 B1**
(45) Date of publication and mention of the grant of the patent: **02.12.2009**
(21) Application number: 06709746.9
(22) Date of filing: 14.02.2006
(51) Int. Cl.: B60K 15/04

(54) **FUEL FILLER PIPE**
KRAFTSTOFFEINFÜLLSTUTZEN
TUYAU DE REMPLISSAGE DE CARBURANT

(30) Priority: 26.02.2005 GB 0504000
(43) Date of publication of application: 21.11.2007
(73) Proprietor: Nissan Motor Manufacturing (UK) Ltd., Cranfield, Bedfordshire MK43 0DB (GB)
(72) Inventor: KAVANAGH, Rob, Nissan Technical Centre Europe, Bedfordshire MK43 0DB (GB)
(74) Representative: Hufton, Victoria Alice
(86) International application number: PCT/GB2006/000509
(87) International publication number: WO 2006/090117

(56) References cited:
- EP-A- 0 980 780
- US-A- 4 450 880
- US-A1- 2001 027 675
- US-A1- 2005 016 619
- US-B1- 6 886 613
- PATENT ABSTRACTS OF JAPAN vol. 1997, no. 06, 30 June 1997 (1997-06-30) & JP 09 039591 A (HORIE METAL CO LTD), 10 February 1997 (1997-02-10)

## Description

The present invention relates to a fuel filler pipe for automobiles. Examples of prior art are provided by documents US 4 450 880 and EP 0 980 780.

Conventional fuel filler pipes are manufactured with an insert which serves several purposes. Firstly, for petrol driven automobiles the insert is designed to prevent a user inserting a diesel fuel gun nozzle into the filler pipe of the petrol driven vehicle, thus preventing the user from inadvertently contaminating the vehicle fuel tank with the wrong fuel. The insert restricts entry of the diesel fuel gun nozzle. A second purpose of the insert is to position the nozzle of the fuel gun relative to the longitudinal axis of the fuel filler pipe to reduce disruption to the laminar flow of the fuel from the nozzle along the filler pipe. This is beneficial in that where there is a poor laminar flow of fuel the back pressure can sometimes cause the fuel gun control to trip and cut off the supply of fuel, and in extreme cases can actually cause a reverse flow of fuel out of the filler pipe which is in itself extremely dangerous. However, the provision of the insert significantly increases the time and cost of manufacture of the filler pipe.

The present invention seeks to provide an improved fuel filler pipe.

Aspects of the invention therefore provide a fuel filler pipe as claimed in the appended claims.

In an embodiment, a fuel filler pipe for an automobile comprises a main body and a filler neck, wherein the main body has an inward deformation at a preselected axial position in the pipe, the deformation being arranged so as to position a fuel gun nozzle inserted in to the pipe for reducing disruption to the laminar flow of fuel from the nozzle through the pipe.

In an embodiment, a fuel filler pipe for a petrol drive automobile comprises a main body and a filler neck, wherein the main body has an inward deformation at a preselected axial position in the pipe arranged to prevent insertion of a diesel fuel gun nozzle beyond said position and allow insertion of an unleaded fuel gun nozzle beyond said position.

Advantageously, the inward deformation is formed by at least one inwardly projecting portion of a sidewall of the main body of the pipe.

In one embodiment the inwardly projecting portion of said sidewall extends the full circumference of the main body.

In a preferred embodiment of the invention the inward deformation is formed by three angularly spaced inwardly projecting portions of said sidewall of the main body.

Advantageously, the three inwardly projecting portions of said sidewall of the main body are equi-angularly spaced about said sidewall..

In a further preferred embodiment of the invention the or each of said inwardly projecting portions is generally frusto-conical in shape and has a radially inner surface having an arcuate cross-section in a plane perpendicular to the longitudinal axis of the main body of the pipe at said position.

Advantageously, the or at least one of said inwardly projecting portions has a radially inner surface having a substantially part cylindrical shape coaxial with said pipe main body.

The present invention is further described hereinafter, by way of example, with reference to the accompanying drawings, in which:
Figure 1 is a longitudinal section through a conventional fuel filler pipe;
Figure 2 is a view of the pipe of Figure 1 in the direction of arrow A.
Figure 3 is a longitudinal section through a preferred embodiment of a fuel filler pipe according to the present invention;
Figure 4 is a view of the pipe of Figure 3 in the direction of arrow A; and
Figure 5 is a section along the line V-V of Figure 3 showing the shape of the deformations in the pipe of Figure 3.

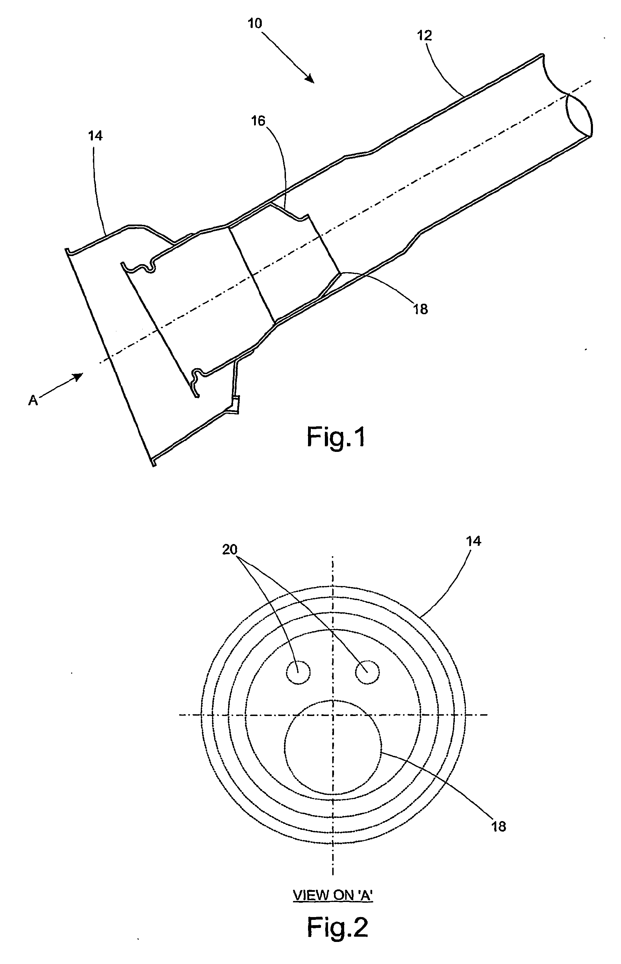

Referring firstly to Figures 1 and 2, these show a conventional automobile fuel filler pipe 10. The filler pipe has a main body 12 connecting a filler neck 14 with a fuel tank (not shown). The fuel filler pipe 10 is used for fuel supply to the fuel tank of the automobile and the main body 12 forms a conduit from the filler neck 14 to the fuel tank.

The filler pipe illustrated in Figures 1 and 2 has a filler neck 14 at an outer end of the filler pipe, and a main body 12 which is provided with an insert 16.

As can be seen in the drawings the insert 16 is generally funnel-shaped, being circular in cross-section with a part or frusto-conical neck connecting the inlet portion of the insert with a narrow, circular outlet 18 at the downstream end, the diameter of which is sufficient to allow passage of the nozzle of fuel gun Because the diameter of the outlet 18 provides a relatively close fit for the fuel gun nozzle it is offset from the longitudinal axis of the insert 16 and breather holes 20 are provided in the part conical neck of the insert 16.

The insert 16 is a press-fit or welded or otherwise secured to the inner surface of the filler pipe main body 12.

The insert 16 serves two main purposes. Firstly, as the nozzle of the fuel gun is inserted through the filler neck 14 and into the main body 12 of the pipe it is guided through the outlet 18 which positions the nozzle relative to the pipe 12 to provide a smoother laminar flow of the fuel from the nozzle through the pipe 12.

The position of the fuel gun nozzle relative to the pipe 12 determines the smoothness of the laminar flow of fuel. If it is positioned such that this flow is disrupted, the consequent build up in pressure in the pipe 12 can cause a back flow of fuel out of the inlet 14 which can be extremely dangerous. If less severe, it can cause the fuel flow to shut off intermittently.

The outlet 18 of the insert 16 is therefore arranged to position the fuel gun nozzle to reduce or eliminate this potential hazard.

Secondly, the insert can be used in fuel filler pipes for petrol driven automobiles to prevent a user inserting a diesel fuel gun nozzle into the filler pipe of the petrol driven vehicle. In this case, the outlet 18 is of a diameter which is sufficient to allow passage of the nozzle of an unleaded fuel gun but is too narrow to allow the passage of the nozzle of a diesel fuel gun.

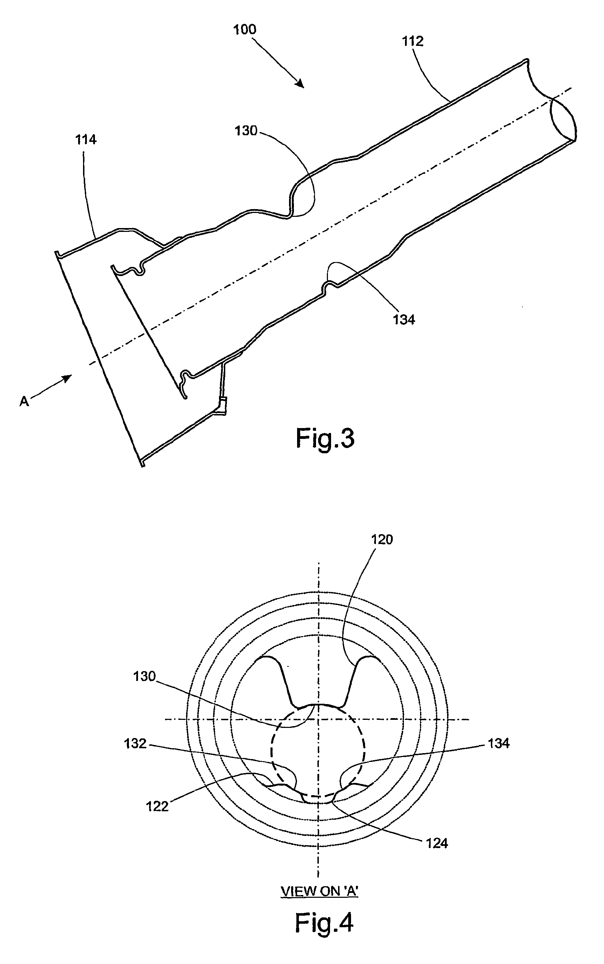

Referring now to Figures 3 and 4, these show views, similar to those of Figures 1 and 2, of a preferred form of fuel filler pipe 100 according to the present invention. As can be seen from the drawings, the filler pipe is generally conventional in design and construction. However, instead of an insert such as the insert 16 used in the conventional filler pipe, the main body 112 of the pipe is deformed inwardly to provide a restriction which serves the same purpose as the insert of the conventional pipe. In the illustrated embodiment the restriction or inward deformation is formed by three inwardly projecting portions or deformations 120, 122 and 124 of the sidewall of the pipe main body, although it will be appreciated that this number may be varied. For example, the restriction may be form by an inward deformation of the pipe extending the full circumference (360 ) of the pipe main body 112.

However, the use of three inwardly projecting portions or deformations (sometimes referred to as lozenges) as shown in Figures 3 to 5 is the preferred form since they can define a "circular" restriction, equivalent to the outlet 18 of the conventional insert, to receive the fuel gun nozzle.

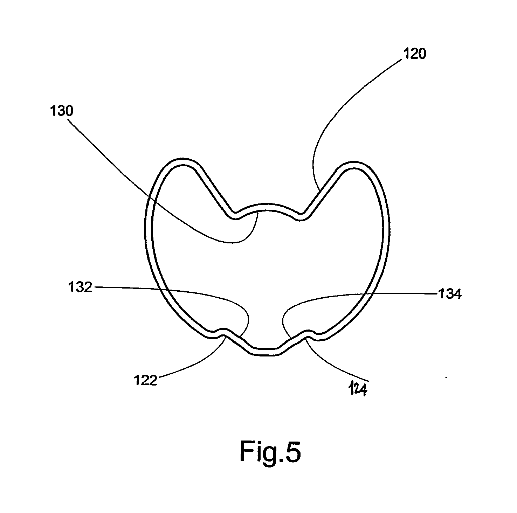

As can be seen from Figures 4 and 5, one or more of the three deformations is typically of a generally frusto-conical shape having a side wall or walls extending from the inner surface of the main body of the fuel pipe 100 and terminating in a radially inner surface 130, 132, 134. The or each surface 130, 132, 134 is conveniently of arcuate shape in cross-section taken in a plane perpendicular to the longitudinal axis of the pipe 100 at that point. Although where the projecting portions or deformations are shallow, as are deformations from 122, 124 in Figure 5, the actual shape of the surfaces 132, 134 is not critical.

Where the inner surfaces 130, 132, 134 extend only a few millimetres axially of the pipe they can have a generally rounded surface in the axial direction. Where a surface extends for more than a few millimetres it is preferable for the surface to be generally part cylindrical in shape.

The portions 120, 122, 124 and the inner surfaces 130, 132, 134 can be shaped to provide an orifice which narrows longitudinally of the pipe 100 in a direction away from the filler neck 114 to facilitate location of the fuel gun nozzle.

Where the surfaces 130, 132, 134 are part cylindrical in shape this is preferably coaxial with the pipe 100 and may conveniently be tapered inwardly in the direction away from the filler neck. The effect is to define a "cylindrical" or "circular" aperture which is dimensioned to allow passage of the nozzle of an unleaded fuel gun whilst preventing passage of the nozzle of a diesel fuel gun.

Whilst the number and shape of the protrusions shown in Figure 3 and 4 and described above is to be preferred, it will be appreciated that any suitable number and shapes may be used.

The preferred form of fuel filler pipe as described above provides a significant saving in both time and cost in the manufacture of such filler pipes.

## Claims

1. A fuel filler pipe (100) for a petrol driven automobile, the pipe (100) having a main body (112) and a filler neck, wherein the main body (112) has an inward deformation (120, 122, 124) at a pre-selected axial position in the pipe (100) arranged to prevent insertion of a diesel fuel gun nozzle beyond said position and allow insertion of an unleaded fuel gun nozzle beyond said position;
wherein the inward deformation (120, 122, 124) is formed by at least one inwardly projecting portion of a sidewall of the main body (112);
wherein the or at least one of said inwardly projecting portions has a radially inner surface (130, 132, 134) defining an arcuate cross-section in a plane perpendicular to the longitudinal axis of the main body (112) of the pipe (100) at said position: and wherein the arcuate cross-section defined by the radially inner surface (130, 132, 134) is substantially co-axial with the main body (112) of the pipe (100) so as to align the fuel gun nozzle with the longitudinal axis of the main body (12) of the pipe (100).

2. A fuel filler pipe (100) as claimed in claim 1, wherein the or each inner surface (130, 132, 134) of the main body (112) is arranged on a single plane perpendicular to the main body (112) so that the fuel gun nozzle is guided by contact with each inner surface (130, 132, 134) simultaneously upon insertion so as to guide the fuel gun nozzle and reduce disruption to the laminar flow of fuel from the nozzle through the pipe (100).

3. A fuel filler pipe (100) as claimed in claim 1 or claim 2, wherein said inwardly projecting portion of said sidewall extends the full circumference of the main body (112).

4. A fuel filler pipe (100) as claimed in claim 1 or claim 2, wherein the inward deformation (120, 122, 124) is formed by three angularly spaced inwardly projecting portions of said sidewall of the main body (112).

5. A fuel filler pipe (100) as claimed in claim 4, wherein the three inwardly projecting portions of said sidewall of the main body (112) are equi-angularly spaced about said sidewall.

6. A fuel filler pipe (100) as claimed in any one of the preceding claims, wherein the or each of said inwardly projecting portions is generally frusto-conical in shape.

7. A fuel filler pipe (100) as claimed in any one of the preceding claims, wherein the or at least one of said inwardly projecting portions has a radially inner surface (130, 132, 134) having a substantially part cylindrical shape coaxial with said pipe main body (112).

## Patentansprüche

1. Kraftstoffeinfüllrohr (100) für ein benzinbetriebenes Kraftfahrzeug, wobei das Rohr (100) einen Hauptkörper (112) und einen Füllstutzen umfasst, wobei der Hauptkörper (112) an einer vorhergewählten axialen Position im Rohr (100) eine nach innen gehende Verformung (120, 122, 124) hat, die dazu angeordnet ist, das Einführen einer Dieselkraftstoff-Zapfpistolendüse über diese Position hinaus zu verhindern und das Einführen einer Bleifrei-Kraftstoff-Zapfpistolendüse über diese Position hinaus zuzulassen;
wobei die nach innen gehende Verformung (120, 122, 124) durch mindestens einen nach innen ragenden Abschnitt einer Seitenwand des Hauptkörpers (112) gebildet wird;
wobei der beziehungsweise mindestens einer der nach innen ragenden Abschnitte eine radial innen liegende Oberfläche (130, 132, 134) hat, die einen bogenförmigen Querschnitt in einer zur Längsachse des Hauptkörpers (112) des Rohrs (100) senkrechten Ebene an dieser Position definiert; und wobei der von der radial innen liegenden Oberfläche (130, 132, 134) definierte bogenförmige Querschnitt im Wesentlichen koaxial mit dem Hauptkörper (112) des Rohrs (100) ist, um die Kraftstoffpistolendüse mit der Längsachse des Hauptkörpers (12) des Rohrs (100) auszurichten.

2. Kraftstoffeinfüllrohr (100) nach Anspruch 1, wobei die beziehungsweise jede innere Oberfläche (130, 132, 134) des Hauptkörpers (112) auf einer einzigen Ebene senkrecht zum Hauptkörper (112) angeordnet ist, so dass die Kraftstoffpistolendüse beim Einführen gleichzeitig durch den Kontakt mit jeder inneren Oberfläche (130, 132, 134) geführt wird, um die Kraftstoffpistole zu führen und Störungen der laminaren Strömung von Kraftstoff aus der Düse durch das Rohr (100) zu verringern.

3. Kraftstoffeinfüllrohr (100) nach Anspruch 1 oder Anspruch 2, wobei sich der genannte nach innen ragende Abschnitt der genannten Seitenwand um den gesamten Umfang des Hauptkörpers (112) erstreckt.

4. Kraftstoffeinfüllrohr (100) nach Anspruch 1 oder Anspruch 2, wobei die nach innen gehende Verformung (120, 122, 124) durch drei in Winkelabständen angeordnete, nach innen ragende Abschnitte der genannten Seitenwand des Hauptkörpers (112) gebildet wird.

5. Kraftstoffeinfüllrohr (100) nach Anspruch 4, wobei die drei nach innen ragenden Abschnitte der genannten Seitenwand des Hauptkörpers (112) in gleichen Winkelabständen um die genannte Seitenwand angeordnet sind.

6. Kraftstoffeinfüllrohr (100) nach einem der vorangehenden Ansprüche, wobei der beziehungsweise jeder der genannten nach innen ragenden Abschnitte allgemein eine stumpfkegelige Form hat.

7. Kraftstoffeinfüllrohr (100) nach einem der vorangehenden Ansprüche, wobei der beziehungsweise mindestens einer der genannten nach innen ragenden Vorsprünge eine radial innen liegende Oberfläche (130, 132, 134) mit einer im Wesentlichen teilzylindrischen Form hat, die mit dem genannten Hauptkörper des Rohrs (112) koaxial ist.

## Revendications

1. Tuyau de remplissage de carburant (100) pour une automobile à essence, le tuyau (100) ayant un corps principal (112) et un goulot de remplissage, dans lequel le corps principal (112) présente une déformation vers l'intérieur (120, 122, 124) à une position axiale présélectionnée dans le tuyau (100) agencée pour empêcher l'insertion d'un pistolet à gazole au-delà de ladite position et permettre l'insertion d'un pistolet à carburant sans plomb au-delà de ladite position ;
dans lequel la déformation vers l'intérieur (120, 122, 124) est formée par au moins une partie saillant vers l'intérieur d'une paroi latérale du corps principal (112) ;
dans lequel la ou au moins l'une desdites parties saillant vers l'intérieur a une surface radialement interne (130, 132, 134) qui définit une section arquée dans un plan perpendiculaire à l'axe longitudinal du corps principal (112) du tuyau (100) à ladite position ; et dans lequel la section arquée définie par la surface radialement interne (130, 132, 134) est sensiblement coaxiale avec le corps principal (112) du tuyau (100) de façon à aligner le pistolet à carburant avec l'axe longitudinal du corps principal (12) du tuyau (100).

2. Tuyau de remplissage de carburant (100) selon la revendication 1, dans lequel la ou chaque surface interne (130, 132, 134) du corps principal (112) est agencée sur un plan unique perpendiculaire au corps principal (112) de telle sorte que le pistolet à carburant soit guidé par contact avec chaque surface interne (130, 132, 134) simultanément à son insertion de façon à guider le pistolet à carburant et à réduire la perturbation de l'écoulement laminaire du carburant depuis le pistolet à travers le tuyau (100).

3. Tuyau de remplissage de carburant (100) selon la revendication 1 ou la revendication 2, dans lequel ladite partie saillant vers l'intérieur de ladite paroi latérale s'étend sur toute la circonférence du corps principal (112).

4. Tuyau de remplissage de carburant (100) selon la revendication 1 ou la revendication 2, dans lequel la déformation interne (120, 122, 124) est formée par trois parties saillant vers l'intérieur de ladite paroi latérale du corps principal (112) espacées angulairement.

5. Tuyau de remplissage de carburant (100) selon la revendication 4, dans lequel les trois parties saillant vers l'intérieur de ladite paroi latérale du corps principal (112) sont angulairement équidistantes autour de ladite paroi latérale.

6. Tuyau de remplissage de carburant (100) selon l'une quelconque des revendications précédentes, dans lequel la ou chacune desdites parties saillant vers l'intérieur est généralement de forme tronconique.

7. Tuyau de remplissage de carburant (100) selon l'une quelconque des revendications précédentes, dans lequel la ou chacune desdites parties saillant vers l'intérieur a une surface radialement interne (130, 132, 124) ayant une forme sensiblement partiellement cylindrique coaxiale avec le corps principal (112) dudit tuyau.
